Europäisches Patentamt

European Patent Office

Office européen des brevets

(19)

(11) Veröffentlichungsnummer: **0 191 380**
**B1**

(12) **EUROPÄISCHE PATENTSCHRIFT**

(45) Veröffentlichungstag der Patentschrift:
**25.10.89**

(21) Anmeldenummer: **86101262.3**

(22) Anmeldetag: **31.01.86**

(51) Int. Cl.⁴: **F 01 D 17/18,** F 02 B 37/12,
F 01 D 9/04

(54) Abgasturboladerturbine.

(30) Priorität: **20.02.85 CH 771/85**

(43) Veröffentlichungstag der Anmeldung:
**20.08.86 Patentblatt 86/34**

(45) Bekanntmachung des Hinweises auf die Patenterteilung:
**25.10.89 Patentblatt 89/43**

(84) Benannte Vertragsstaaten:
**CH DE FR GB LI NL**

(56) Entgegenhaltungen:
EP-A-0 093 462
DE-A-2 840 201
DE-A-3 242 713
DE-C-895 293
FR-A-403 153
FR-A-1 194 802
FR-A-2 309 712
FR-A-2 351 249
GB-A-989 581

(73) Patentinhaber: **BBC Brown Boveri AG,
Haselstrasse, CH- 5401 Baden (CH)**

(72) Erfinder: **Linsi, Ulrich, Reinhold Freistrasse 65, CH-
8049 Zürich (CH)**

## Beschreibung

Die vorliegende Erfindung betrifft einen Abgasturbolader für Verbrennungsmotoren gemäss Oberbegriff des Anspruchs 1.

Bei Verbrennungsmotoren dient der Abgasturbolader der Leistungssteigerung. Bei vielen Anwendungen mit variabler Motordrehzahl (z. B. Schiffs- und Fahrzeugantrieb) ist ein hoher Ladedruck bei Teildrehzahl erwünscht. Zur relativen Anhebung des Ladedruckes bei Teillast im Vergleich zum Vollastpunkt sind verschiedene Lösungen bekannt, so die Verwendung einer Turbine mit speziell engen Durchflussquerschnitten, welche ermöglichen, dass der Ladedruck im ganzen Betriebsbereich angehoben wird. Damit der Ladedruck bei Vollast den zulässigen Wert nicht überschreitet, wird bei hohen Leistungen entweder ein Teil der Ladeluft nach Verdichter oder ein Teil der Abgase vor Turbine ins Freie abgeblasen. Der Nachteil dieser Lösung besteht darin, dass das Abblasen von Hochdruck-Luft oder -Gas gleich wie eine Verschlechterung des Turboladerwirkungsgrades wirkt, was eine Erhöhung des Brennstoffverbrauchs nach sich zieht.

Eine weitere Möglichkeit zur relativen Anhebung des Ladedruckes bei Teillast bietet die Verwendung von verstellbaren Turbinenleitschaufeln. Damit kann der Turbinenquerschnitt bei Vollast gross und bei Teillast klein eingestellt werden. Die Nachteile dieser Lösung bestehen darin, dass das Verstellen einer grossen Anzahl von Leitschaufeln (z. B. 18 bis 36 Schaufeln) mechanisch recht kompliziert und wenig betriebssicher ist, insbesondere wenn die Turboladerturbine von den Abgasen eines mit Schweröl betriebenen Dieselmotors beaufschlagt wird. Dabei besteht hier die Gefahr von Erosion der beweglichen Leitschaufeln durch harte Russteile oder der Behinderung der Beweglichkeit der Leitschaufeln durch Ablagerung von nicht fertigverbrannten Brennstoffteilen.

Aus DE-2 934 041 C2 und DE-3 346 472 A1 sind Abgasturbinen bekannt, bei welchen verschiedene Kanäle die lastabhängige Zuströmung zu den Laufschaufeln übernehmen. Diese Turbinen weisen aber durchwegs schaufellose Leitvorrichtungen auf.

Aus EP-0 093 462 A1 ist eine Turbine bekannt, welche mit einem in axialer Richtung verstellbaren Ringschieber zur Veränderung des Turbinenquerschnittes versehen ist, wobei der Ringschieber zwischen Turbinenleitapparat und Turbinenleitschaufeln angeordnet ist. Dies hat aber zur Folge, dass bei Teillast der Abgasstrom an der Laufschaufelspitze zugeführt wird, dort also, wo die Zentrifugalwirkung des Abgasstromes am grössten ist und daher die immanente Gefahr besteht, dass der kleine Strömungsquerschnitt durch Russteile zugepflastert werden kann. Des weiteren bedingt diese Auslegung, dass die Stirnfläche des Ringschiebers ablösungsfrei ausgebildet wird, was bei Zugrundelegung eines variablen Abgasstromes zu konstruktiv nicht optimalen Kompromissen führen kann.

Aus DE-A-2 840 201 geht eine Steuerung der Abgasströmung zu einem oder mehreren Nebenleitkränzen hervor. Diese mit Ringschiebern funktionierende Steuerung will in jeder Betriebsstellung einen strömungsgünstigen gestalteten Zuströmkanal schaffen. Zu diesem Zweck werden einzelne Partien der Laufschaufel durch entsprechende Ringschieberbetätigung nicht beaufschlagt. Die durch diese Technik nicht beaufschlagten Laufschaufelpartien erzeugen ein Ventilationseffekt, was zu nahmhaften Wirkungsgradverlusten führt.

Hier will die Erfindung Abhilfe schaffen. Der Erfindung, wie sie in den Ansprüchen gekennzeichnet ist, liegt die Aufgabe zugrunde, bei einem Abgasturbolader der eingangs genannten Art den Ladedruck bei Vollast abzusenken, ohne den Wirkungsgrad der Turbine zu verschlechtern.

Der wesentliche Vorteil der Erfindung ist darin zu sehen, dass bei Teillast des Verbrennungsmotors die Turbine nur über den Hauptleitkranz beaufschlagt wird. Erst bei Vollast wird die stromabwärts eingebaute Klappe geöffnet, wodurch der dort abgezweigte Abgasstrom über den Nebenleitkranz, welcher parallel zum Hauptleitkranz geschaltet ist, ebenfalls der Turbine zugeführt wird. Durch das Schliessen des Zuströmkanals zum Nebenleitkranz bei Teillast wird die Strömung nicht wesentlich gestört, denn die innere Meridiankontur des Hauptleitkranzes liegt im wesentlichen in der Fortsetzung der inneren Meridiankontur der Turbinenlaufschaufeln, wobei hierin - je nach Auslegung der Abgasturboladerturbine - kleine Abweichungen aus unterschiedlichem Verlauf der Meridiankonturen entstehen können. Ein weiterer Vorteil ergibt sich aus der Tatsache heraus, dass sich der Hauptleitkranz mit seinem gegenüber dem Nebenleitkranz grossen Strömungsquerschnitt in dem äusseren Zuströmkanal befindet, wodurch keine Gefahr mehr besteht, dass der Zuströmungsquerschnitt durch Russteile zugepflastert werden kann. Des weiteren sind in unmittelbarer Nachbarschaft der Leitschaufeln keine beweglichen Teile vorhanden, wodurch die Gefahr eines Verkokens der Verstelleinrichtung ebenfalls kein Problem mehr bildet. Auch lässt sich eine Überprüfung und Reinigung einer stromabwärts plazierten Klappe leichter bewerkstelligen als die Reinigung einer Verstelleinrichtung im Bereich der Leit- und Laufschaufeln.

In der Zeichnung sind Ausführungsbeispiele der Erfindung schematisch dargestellt.

Es zeigt:

Fig. 1 eine axiale Abgasturboladerturbine mit Haupt- und Nebenleitkranz und stromaufwärts eingebauter Klappe und

Fig. 2 eine gleiche Abgasturboladerturbine mit unterschiedlicher innerer Meridiankontur der Leit- und Laufschaufeln.

Alle für das unmittelbare Verständnis der Erfindung nicht erforderlichen Elemente sind fortgelassen. Die Strömungsrichtung der Abgase ist mit Pfeilen bezeichnet. In den beiden Figuren sind gleiche Elemente mit gleichen Bezugszeichen versehen.

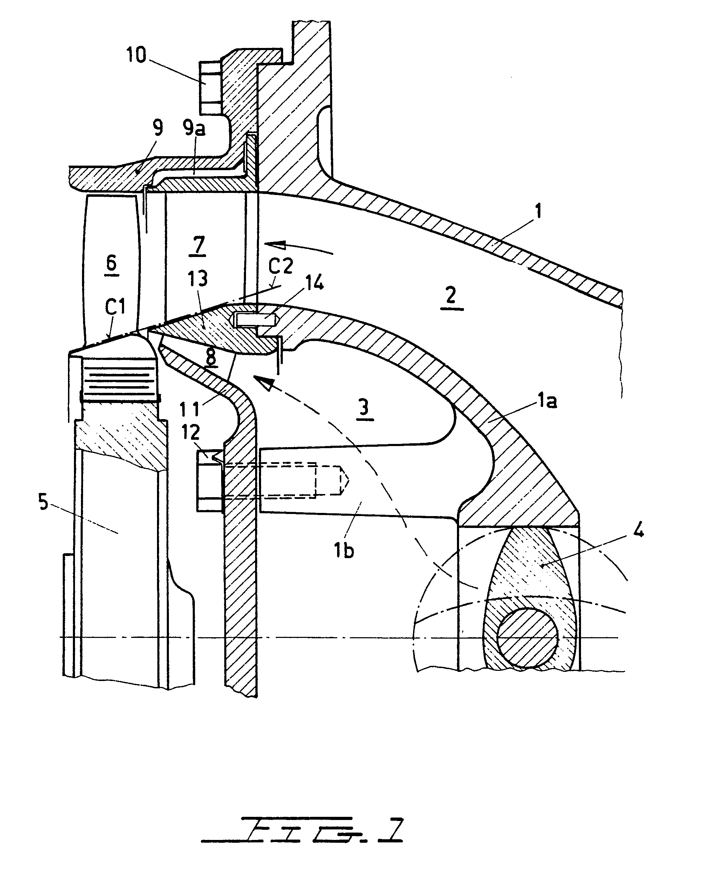

Wie aus Fig. 1 ersichtlich ist, wird die Abgaszuströmung im Gehäuse 1 durch eine Trennwand 1a aufgeteilt. Eine stromaufwärts im Gaseintrittsgehäuse plazierte Klappe 4 ist in einer Verdickung der Trennwand 1a gelagert. Gezeigt ist die Klappe 4 in geschlossener Stellung, d.h. der ganze Abgasstrom durchströmt hier nur den Hauptkanal 2. Der Abschluss des Hauptkanals 2 wird abströmseitig durch einen Hauptleitkranz 7 gebildet, der aus einer Anzahl fester Leitschaufeln besteht. Der Hauptleitkranz 7 ist hauptkanalaussenseitig zwischen Gehäuse 1 und Turbinenabdeckring 9 positioniert, wobei dieser in radialer Richtung eine der Aussenkontur des Hauptleitkranzes 7 entsprechend ausgelegte Aussparung 9a aufweist, wodurch die Aussenströmungswände des Hauptkanals 2, des Hauptleitkranzes 7 und des Turbinenabdeckringes 9 so ineinander Platz finden können, dass die Strömung in diesem Bereich keine Störung erfährt. Axial ist hingegen die Aussparung 9a so ausgelegt, dass der Hauptleitkranz 7 zwischen Gehäuse 1 und Turbinenabdeckring 9 eingefangen und mittels Schrauben 10 fixiert werden kann.

Ein zwischen den parallelgeschalteten Hauptleitkranz 7 und Nebenleitkranz 8 vorgesehener Ring 13 mit seiner tropfenförmigen Form bildet den strömungsidealen Übergang der beiden Zuströmungskanäle 2 und 3 zu den Turbinenlaufschaufeln 6. Dieser Ring 13 ist in diesem Beispiel ein Teil des Hauptleitkranzes 7. Der Nebenleitkranz 8 liegt auf einem kleineren Durchmesser als der Hauptleitkranz 7, also innerhalb des Hauptleitkranzes. Positioniert ist der Hauptleitkranz 7 an einer stromabwärtsseitigen Verdickung der Trennwand 1a mittels eines Zentrierbolzens 14 der in den Ring 13 eingreift. Die Schaufeln des Nebenleitkranzes 8 können entweder am Ring 13 oder an der Wand 11 befestigt sein. Eine Innenwand 11 bildet den Abschluss des Nebenkanals 3; sie ist an mehreren Rippen 1b, welche axial und quer zur Strömungsrichtung im Nebenkanal 3 aus er Trennwand 1a herausragen, mittels Schrauben 12 befestigt.

Ein Turbinenlaufrad 5 trägt auf seinem Umfang eine Anzahl Turbinenschaufeln 6. Der Nebenleitkranz 8 ist so angeordnet, dass durch die Schliessung der Klappe 4 der Abgasstrom durch die Laufschaufeln 6 nicht wesentlich gestört wird. Dies wird dadurch erreicht, dass die innere Meridiankontur C2 des Hauptleitkranzes 7 im wesentlichen in der Fortsetzung der inneren Meridiankontur C1 der Turbinenlaufschaufeln 6 liegt.

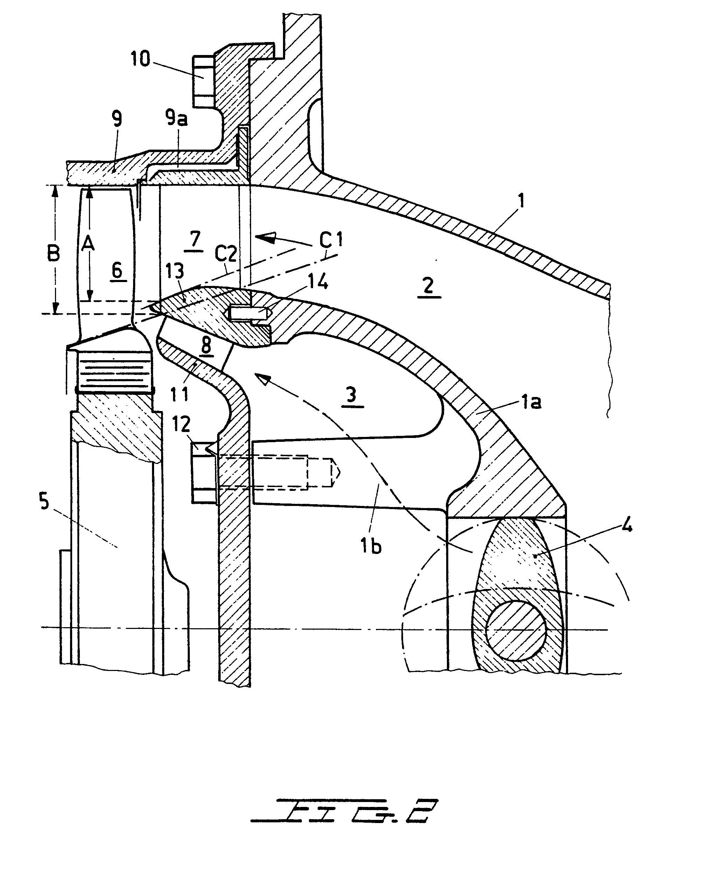

Ist bei Vollast eine grössere Durchströmungsöffnung im Nebenleitkranz 8 verlangt, so sind die beiden Meridiankonturen C1, C2 zueinander etwas verschoben angeordnet, wie dies aus Fig. 2 hervorgeht. Damit allerdings die Strömung durch die Laufschaufeln nicht erheblich gestört wird, muss die Verschiebung der beiden Meridiankonturen C1, C2 zueinander in engen Grenzen gehalten werden. Ein Mass dafür stellt das Verhältnis der radialen Öffnungen A, B an der Schnittstelle der inneren Meridiankonturen C1, C2 mit der abströmseitigen Kante des Hauptleitkranzes 7 dar. Die Öffnung A soll dabei gleich oder grösser 70 % der Öffnung B betragen, maximal jedoch 110 %.

## Patentansprüche

1. Abgasturbolader für Verbrennungsmotoren, bei dem den Turbinenlaufschaufeln eine beschaufelte Leitvorrichtung vorgeschaltet ist, die aus einem Hauptleitkranz (7) und einem gegenüber diesem auf einem kleineren Durchmesser liegenden Nebenleitkranz (8) mit je voneinander getrennten Zuströmkanälen (2, 3) besteht, wobei die Steuerung des Abgasstroms zu dem Nebenleitkranz (8) durch Mittel (4) geschieht, die im Gaseintrittsgehäuse (1) des Abgasturboladers vor dem Nebenleitkranz (8) angeordnet sind, dadurch gekennzeichnet, dass die zwischen Aussendurchmesser des Hauptleitkranzes (7) und Schnittstelle deren inneren Meridiankontur (C2) mit der Hinterkante des Hauptleitkranzes (7) gebildete Ringfläche (A) 70 - 110 % gegenüber der zwischen Aussendurchmesser des Hauptleitkranzes (8) und Schnittstelle der inneren Meridiankontur (C1) der Turbinenlaufschaufeln (6) mit der Hinterkante des Hauptleitkranzes (7) bzw. deren Verlängerung gebildeten Ringfläche (B) beträgt und dass die innere Meridiankontur (C2) des Hauptleitkranzes (7) im wesentlichen in der Fortsetzung der inneren Meridiankontur (C1) der Laufschaufeln (6) liegt.

2. Abgasturbolader nach Anspruch 1, dadurch gekennzeichnet, dass das Mittel (4) eine Klappe ist.

## Claims

1. Exhaust gas turbo-charger for internal combustion engines in which a vaned guide device is located upstream of the turbine rotor blades, which guide device consists of a main guide ring (7) and an auxiliary guide ring (8) located at a smaller diameter than the main guide ring (7) and having mutually separate inlet flow ducts (2, 3), the control of the exhaust gas flow to the auxiliary guide ring (8) being by means (4) located in front of the auxiliary guide ring (8) in the gas inlet casing (1) of the exhaust gas turbo-charger, characterised in that the annular area (A) formed between the outer diameter of the main guide ring (7) and the intersection of its inner meridianal contour (C2) with the trailing edge of the main guide ring (7) is 70 - 110 % of the annular area (B) formed between the outer diameter of the main guide ring (8) (sic) and the intersection of the inner meridianal contour (C1) of the turbine rotor blades (6) with the trailing edge of the main guide ring (7) or its prolongation and that the inner meridianal contour (C2) of the main guide ring (7) is substantially located in the continuation of the inner meridianal contour (C1) of the rotor blades (6).

2. Exhaust gas turbocharger according to claim 1, characterised in that the means (4) is a butterfly.

**Revendications**

1. Turbocompresseur à gaz d'échappement pour moteurs à combustion interne, dans lequel les ailettes mobiles de la turbine sont précédées d'un dispositif directeur à ailettes qui est formé d'une couronne directrice principale (7) et d'une couronne directrice secondaire (8) d'un diamètre plus petit que celui de la première, pour lesquelles sont prévus des canaux d'alimentation (2, 3) respectifs séparés, la commande du flux de gaz d'échappement vers la couronne directrice secondaire (8) étant assurée par des moyens (4) qui sont installés dans le carter d'entrée de gaz (1) du turbocompresseur à gaz d'échappement en amont de la couronne directrice secondaire (8), caractérisé en ce que l'aire annulaire (A) formée entre le diamètre extérieur de la couronne directrice principale (7) et l'intersection de son contour méridien intérieur (C2) avec le bord postérieur de la couronne directrice principale (7) vaut 70 à 110 % de l'aire annulaire (B) formée entre le diamètre extérieur de la couronne directrice principale (7) et l'intersection du contour méridien intérieur (C1) des ailettes mobiles de turbine (6) avec le bord postérieur de la couronne directrice principale (7) ou son prolongement et que le contour méridien intérieur (C2) de la couronne directrice principale (7) se situe essentiellement dans le prolongement du contour méridien intérieur (C1) des ailettes mobiles (6).

2. Turbocompresseur à gaz d'échappement suivant la revendication 1, caractérisé en ce que les moyens (4) sont constitués par un volet.

FIG. 1

FIG.2